Europäisches Patentamt

European Patent Office

Office européen des brevets

(19)

(11) Numéro de publication : **0 080 243**
**B1**

(12)

# FASCICULE DE BREVET EUROPÉEN

(45) Date de publication du fascicule du brevet :
20.02.85

(51) Int. Cl.⁴ : **D 06 F 37/20, F 16 F 7/08**

(21) Numéro de dépôt : **82201479.1**

(22) Date de dépôt : **22.11.82**

(54) **Bras de suspension pour l'accrochage d'une cuve de machine à laver dans sa carrosserie et machine à laver ainsi équipée.**

(30) Priorité : 25.11.81 FR 8122042

(43) Date de publication de la demande :
01.06.83 Bulletin 83/22

(45) Mention de la délivrance du brevet :
20.02.85 Bulletin 85/08

(84) Etats contractants désignés :
**DE FR GB IT**

(56) Documents cités :
**DE-A- 1 460 885**
**FR-A- 1 451 820**
**FR-A- 1 570 563**
**FR-A- 2 384 995**
**US-A- 3 744 746**
**US-A- 3 889 937**

(73) Titulaire : **CONSTRUCTIONS ELECTRO-MECANI-
QUES D'AMIENS**
**404, Route d'Abbeville**
**F-80000 Amiens (FR)**
**FR**
**N.V. Philips' Gloeilampenfabrieken**
**Groenewoudseweg 1**
**NL-5621 BA Eindhoven (NL)**
**DE GB IT**

(72) Inventeur : **Gauthier, Gérard Yvon**
**Société Civile S.P.I.D. 209, rue de l'Université**
**F-75007 Paris (FR)**

(74) Mandataire : **Charpail, François et al**
**Société Civile S.P.I.D. 209, rue de l'Université**
**F-75007 Paris (FR)**

Jouve, 18, rue St-Denis, 75001 Paris, France

EP 0 080 243 B1

## Description

La présente invention concerne un bras de suspension extensible et amorti pour l'accrochage d'une cuve de machine à laver et essorer le linge dans sa carrosserie, bras comportant un ressort de traction aux extrémités ancrées dans deux embouts d'accrochage. Il est connu de pendre la cuve d'une machine à laver dans le châssis ou la carrosserie de la machine, au moyen de dispositifs extensibles élastiques à débattement amorti mécaniquement. La demande de brevet d'addition allemande DE-A-1 460 885 divulgue un tel dispositif. Le ressort y est serti par ses spires extrêmes sur les deux embouts et un amortisseur est disposé à l'intérieur du ressort. L'amortisseur est constitué par une tige coulissant dans un anneau de friction, la tige glissant, par ailleurs, dans un tube de guidage.

Cette construction du bras de suspension connu présente plusieurs inconvénients. Tout d'abord, le sertissage des spires extrêmes du ressort est de réalisation délicate, surtout si les embouts du bras sont en matière plastique. D'autre part, l'efficacité de l'amortissement, sa constance au cours de la durée de vie de la machine, ne s'accommodent pas de l'étroitesse de la surface de friction située au contact d'une tige et d'un anneau de friction. Cette surface annulaire est de faible longueur, elle est de faible diamètre également, du fait que l'amortisseur est à l'intérieur du ressort. Enfin, le faible diamètre des pièces en contact de friction est défavorable à une bonne dissipation de la chaleur dégagée par le frottement, ce qui peut occasionner une élévation de température modifiant le coefficient de friction.

L'invention remédie à ces inconvénients. Elle se caractérise par le fait que, dans un bras de suspension amorti, le ressort est logé dans la cavité d'un tube en matière plastique solidaire du premier embout, ledit tube coulissant avec friction dans une enveloppe cylindrique l'enserrant élastiquement, constituée de plaques métalliques montées à une extrémité sur le second embout, parallèles à l'axe du tube et sur lequel elles sont maintenues serrées par au moins un anneau élastique. Une telle construction est simple et permet notamment d'utiliser un ressort spiral à extrémités recourbées accrochées dans des œillets percés dans les embouts, ce qui évite le délicat sertissage des spires terminales. Par ailleurs, la surface de frottement de l'amortisseur est augmentée par accroissement de son diamètre, l'amortisseur entourant le ressort, et de sa longueur, la totalité des plaques de l'enveloppe cylindrique enserrant le tube en matière plastique.

La demande de brevet français IR-A-2 384 995 divulgue un dispositif télescopique élastique et amorti pour cuve de machine à laver, dans lequel l'amortisseur entoure le ressort. Mais il s'agit d'un dispositif sur lequel la cuve est posée, communément appelé « pied ». Le ressort y travaille en compression, ce qui ne fait pas apparaître la nécessité d'un accrochage ou sertissage aux embouts. Par ailleurs, un bras de suspension et un « pied » ne se comportent pas en travail de façon identique. Les grandes oscillations de la cuve qu'ils doivent freiner se produisent lors de l'accélération du tambour en essorage, alors que la cuve est totalement ou en grande partie vidangée, donc allégée. La position moyenne, autour de laquelle oscillent les ensembles télescopiques, correspond donc à une grande extension pour un « pied » sur lequel est posée la cuve et à une rétractation importante pour un bras auquel est accrochée la cuve. Dans le cas du « pied », les surfaces en regard des éléments de frottement sont faibles lorsque le pied est en extension. Cela justifie probablement la disposition de patins à haut coefficient de friction du FR-A-2 384 995. Mais ces patins présentent un inconvénient : outre leur coût et celui de leur fixation sur le manchon élastique, ils limitent le contact thermique, donc la dissipation de chaleur depuis la zone de frottement vers l'atmosphère, par le manchon extérieur. Dans le cas du « bras » d'accrochage, les surfaces en regard des éléments de frottement sont grandes lorsque le bras est rétracté. Cela permet de ne pas utiliser de patins de friction supplémentaires et d'assurer la dissipation thermique par les plaques extérieures du manchon. On peut ainsi utiliser un tube intérieur réalisé en matière plastique.

Lorsque la cuve de la machine à laver est pleine d'eau et de linge, son poids tend les ressorts des bras de suspension. Il n'est pas souhaitable d'utiliser des ressorts trop résistants car, lors de l'essorage du linge, la cuve étant vide d'eau, les bras de suspension doivent être en extension pour absorber les vibrations. Une butée d'extension maximale permet donc d'employer des ressorts de faible résistance. Dans un mode particulier de réalisation de l'invention, le bras de suspension est caractérisé par le fait qu'au moins une plaque constituant l'enveloppe est entaillée sur l'un de ses bords longitudinaux, de façon à présenter un bec transversal proche de son extrémité opposée au second embout, bec susceptible de coopérer avec un ergot faisant saillie de la surface du tube, à l'opposé du premier embout, afin de créer une butée d'extension maximale du bras. Ainsi, pendant le lavage du linge, la cuve pleine d'eau repose sur les butées des bras de suspension, ce qui ne présente pas d'inconvénient, les vibrations engendrées par le tambour tournant à faible vitesse (50 tours par minute par exemple) étant négligeables. Ces butées permettent d'éviter tout contact entre la cuve ou le moteur de la machine, qui est généralement fixé à sa partie inférieure, avec le socle de la machine ou les organes qu'il supporte. Lors de l'essorage par rotation du tambour à grande vitesse, les vibrations engendrées par le linge formant balourd sont absorbées par les bras dont les ressorts, déchargés du poids de l'eau ne sont plus en extension maximale.

L'invention concerne également une machine à laver dont la cuve est accrochée à des bras de suspension du type décrit ci-dessus.

La description qui suit et les dessins illustrent un exemple de réalisation de l'invention.

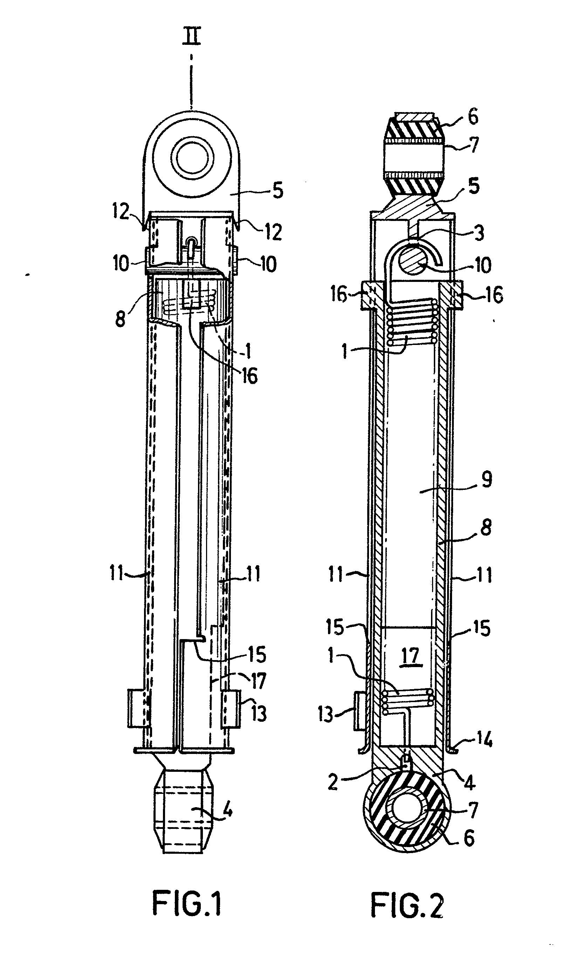

La figure 1 est une vue en plan d'un bras de suspension conforme à l'invention dont l'enveloppe cylindrique a été partiellement écorchée.

La figure 2 est une vue du même bras coupé selon le plan II.

Le bras de suspension donné en exemple est équipé d'un ressort spiral 1 destiné à travailler en traction, dont les extrémités recourbées sont accrochées dans des trous ou œillets 2 et 3 pratiqués dans deux embouts 4 et 5. Sur les figures, les embouts 4 et 5 sont équipés de manchons élastiques 6 traversés de paliers 7 en vue de la fixation du bras au moyen d'un axe sur la cuve, d'une part, et sur la carrosserie ou le châssis de la machine à laver, d'autre part. Tout autre mode d'articulation des embouts 4 et 5 sur cuve et carrosserie peut être envisagé. Les embouts 4 et 5 sont moulés, par exemple, en une résine polyacétal ou polyamide.

L'embout 4 est moulé d'une seule pièce avec un tube 8 s'étendant pratiquement jusqu'à l'embout 5 lorsque le ressort est détendu. Dans la cavité 9 du tube 8 est logé le ressort autour duquel le tube 8 peut circuler librement. L'embout 5 porte deux tétons transversaux symétriques 10 sur lesquels sont accrochées deux plaques 11, percées à cet effet, constituant une enveloppe autour du tube 8. Les plaques 11, de préférence métallique, on la forme de coquilles cylindriques presque semi-circulaires et enserrent le tube 8 dont elles couvrent sensiblement toute la longueur lorsque le ressort est détendu. Les plaques 11 sont identiques. L'embout 5 comporte, dans l'alignement longitudinal des tétons 10, deux rainures 12 dans lesquelles sont engagées les extrémités des coquilles 11, pour leur maintien transversal. Près de leur extrémité opposée à l'embout 5, les coquilles 11 sont serrées sur le tube 8 par un anneau élastique 13 ou un étrier constitué par une lame de ressort. Ce serrage établit la friction qui permet au bras de suspension de transformer l'énergie cinétique de vibration en chaleur, lorsque la cuve qui lui est accrochée oscille. A leur extrémité, les coquilles 11 sont évasées en 14, afin de ne pas présenter d'arête abrasive en contact avec le tube 8.

Les coquilles 11 sont échancrées sur un de leurs bords longitudinaux et sur presque toute leur longueur afin de présenter un bec 15 transversal. Entre les coquilles 11, dans la zone échancrée, peut circuler un ergot 16 appartenant au tube 8 et dont la course est libre jusqu'au bec 15 qui constitue ainsi une butée d'extension maximale du bras. Les deux coquilles 11 étant échancrées, le tube 8 porte deux ergots 16 diamétralement opposés, implantés à l'extrémité opposée à l'embout 4.

Pour l'assemblage du bras, le tube 8 comporte une encoche 17, proche de son extrémité attachée à l'embout 4. Cette encoche facilite l'accrochage du ressort 1 dans l'orifice 2 de l'embout 4.

Le bras de suspension décrit avec les figures fonctionne de la façon suivante. Les embouts 4 et 5, attachés respectivement à la carrosserie et à la cuve de la machine à laver sont réunis par le ressort 1 seulement, et sont donc libres d'osciller l'un par rapport à l'autre, rappelés par la force du ressort. Solidaires de ces embouts, le tube 8 et l'enveloppe formée des coquilles 11 frottent l'un dans l'autre, transformant l'énergie cinétique d'oscillation en chaleur qui est dissipée dans l'atmosphère ambiante par les coquilles 11. Lorsque la cuve est très chargée, par exemple pleine d'eau, les ergots 16 du tube reposent sur les becs 15 de l'enveloppe et la cuve n'est plus suspendue élastiquement. Lorsque la cuve ne contient que du linge à essorer, le ressort est moyennement tendu et, par exemple, les ergots 16 oscillent autour d'une position médiane à mi-hauteur de l'enveloppe.

Par remplacement du ressort 1 et de l'anneau élastique 13, il est possible d'adapter le bras aux caractéristiques particulières d'une machine à laver donnée: masses, balourds, fréquences propres d'oscillations...

**Revendications**

1. Bras de suspension extensible et amorti pour l'accrochage d'une cuve de machine à laver et essorer le linge dans sa carrosserie comportant un ressort de traction aux extrémités ancrées dans deux embouts d'accrochage, caractérisé par le fait que ledit ressort est logé dans la cavité (9) d'un tube en matière plastique solidaire du premier embout (4), ledit tube coulissant avec friction dans une enveloppe cylindrique l'enserrant élastiquement, constituée de plaques métalliques (11) montées à une extrémité sur le second embout (5), parallèles à l'axe du tube sur lequel elles sont maintenues serrées par au moins un anneau élastique (13).

2. Bras de suspension selon la revendication 1, caractérisé par le fait qu'au moins une plaque constituant l'enveloppe est entaillée sur l'un de ses bords longitudinaux, de façon à présenter un bec transversal proche de son extrémité opposée au second embout (5), bec susceptible de coopérer avec un ergot faisant saillie de la surface du tube, à l'opposé du premier embout (4), afin de créer une butée d'extension maximale du bras.

3. Bras de suspension selon l'une quelconque des revendications 1 et 2, caractérisé par le fait que l'enveloppe cylindrique est constituée de deux plaques identiques en forme de coquilles cylindriques sensiblement semi-circulaires.

4. Machine à laver à cuve pendue dans sa carrosserie au moyen de bras de suspension selon l'une quelconque des revendications 1 à 3.

**Claims**

1. A damped extensible suspension arm for suspending a tub of a laundry washing and spindrying machine from its housing, which arm comprises a tension spring whose ends are attached to two mounting portions, characterized in that said spring is arranged in the bore (9) of a plastics tube which is rigidly connected to the first mounting portion (4) and which slides with friction in a cylindrical sleeve which surrounds said tube elastically which sleeve comprises metal plates (11) which are secured to the second mounting portion (5) at one end and which extend parallel to the axis of the tube on which tube they are clamped by at least one elastic ring (13).

2. A suspension arm as claimed in Claim 1, characterized in that one of the longitudinal edges of at least one of the plates constituting the sleeve is formed with a transverse projection near the end which faces the second mounting portion (5), which projection is adapted to cooperate with a pin which projects from the tube surface opposite the first mounting portion (4) so as to form a stop which limits the maximum extension of the arm.

3. An extension arm as claimed in any one of the Claims 1 and 2, characterized in that the cylindrical sleeve comprises two identical plates in the form of substantially semi-cylindrical shells.

4. A washing machine whose tub is suspended from its housing by means of a suspension arm as claimed in any one of the Claims 1 to 3.

**Ansprüche**

1. Ausziehbare und schwingungsdämpfende Einrichtung zum Aufhängen eines Bottichs zum Waschen und Schleudern der Wäsche in ihrem Aufbau mit einer Zugfeder, deren Enden an zwei Befestigungsösen verankert sind, dadurch gekennzeichnet, dass diese Feder sich im Hohlraum (9) eines mit dem ersten Ende (4) eine Einheit bildenden Kunststoffrohrs befindet und dieses Rohr mit Reibungswiderstand in einer zylindrischen, das Rohr elastisch umschliessenden Hülle verschieben kann, die aus Metallplatten (11) besteht, die mit einem Ende auf der zweiten Befestigungsöse (5) montiert sind und parallel zur Rohrachse verlaufen, auf welchem Rohr sie durch zumindest einen elastischen Ring (13) festgehalten werden.

2. Aufhänge-Einrichtung nach Anspruch 1, dadurch gekennzeichnet, dass zumindest eine Platte, die die Hülle bildet, an einer ihrer Längsseiten eine derartige Ausnehmung aufweist, dass dadurch nahe bei ihrem, der zweiten Befestigungsöse (5) gegenüberliegenden Ende ein quergerichteter Vorsprung gebildet wird, der mit einem aus der Oberfläche des Rohrs ausragenden Nocken zusammenarbeiten kann, der der ersten Befestigungsöse (4) gegenüberliegend zur Bildung eines maximalen Ausziehanschlags der Einrichtung vorgesehen ist.

3. Aufhänge-Einrichtung nach einem der Ansprüche 1 und 2, dadurch gekennzeichnet, dass die zylindrische Hülle aus zwei gleichen, schalenförmigen, genau halbkreisförmigen Platten besteht.

4. Waschmaschine mit einem in ihrem Aufbau mittels Aufhänge-Einrichtungen nach einem der Ansprüche 1 bis 3 aufgehängten Bottich.

FIG.1          FIG.2